# EUROPÄISCHE PATENTSCHRIFT

(11) **EP 1 239 792 B1**
(45) Veröffentlichungstag und Bekanntmachung des Hinweises auf die Patenterteilung: **12.07.2006**
(21) Anmeldenummer: 99967006.0
(22) Anmeldetag: 24.12.1999
(51) Int. Cl.: A61C 8/00

(54) **Suprakonstruktion für Implantatkörper**
Superstructure for Implant body
Superstructure pour corps d'implant

(43) Veröffentlichungstag der Anmeldung: 18.09.2002
(73) Patentinhaber: ProFim Ltd., Huddersfield, West Yorkshire HD5 8QQ (GB)
(72) Erfinder: Unger, Dr. med. dent., Heinz-Dieter, 49080 Osnabrück (DE)
(74) Vertreter: Habbel, Ludwig
(86) Internationale Anmeldenummer: PCT/EP1999/010365
(87) Internationale Veröffentlichungsnummer: WO 2001/047429

(56) Entgegenhaltungen:
- WO-A-92/02191
- WO-A-93/09728
- WO-A-96/29019
- FR-A- 2 085 013

## Beschreibung

Die Erfindung betrifft eine Suprakonstruktion nach dem Oberbegriff des Patentanspruchs.

Aus der WO 96/29019 ist eine gattungsgemäße Suprakonstruktion bekannt. Der Kopf des Ankerteils ist kreuzweise geschlitzt, um federbewegliche Segmente zu bilden, die eine elastische Verformbarkeit des Kopfes derart ermöglichen, dass sein Durchmesser komprimiert werden kann. Wenn die Suprakonstruktion mit ihrem Eingriffskanal auf den Kopf geführt wird, kann der Kopf so weit komprimiert werden, dass die Engstelle des Eingriffskanals über den Kopf geführt werden kann und diesen anschließend hintergreifen kann. Durch diese Art der Montage kann die Kaufläche der Suprakonstruktion geschlossen ausgestaltet werden, was hygienisch vorteilhaft ist.

Bei der gattungsgemäßen Suprakonstruktion ist einerseits hygienisch nachteilig, dass die Schlitze im Kopf des Ankerteils, falls sie Keime enthalten sollten, zu Reinigungszwecken schlecht zugänglich sind. Für die Montage der Suprakonstruktion ist zudem nachteilig, dass der Kopf zunächst ungeschützt und allseitig zugänglich ist, bis die Suprakonstruktion montiert ist. Sollte eines der Segmente des Kopfes unabsichtlich verformt werden, kann die Montage der Suprakonstruktion erschwert werden, oder - je nachdem in welcher Form das Segment verformt ist - es kann die spätere Demontage der Suprakonstruktion erheblich erschwert werden.

Aus der WO 93/09728 und der FR 2 085 013 ist jeweils eine Suprakonstruktion bekannt. In beiden Fällen ist ein Ankerteil mit einem ersten Ende kugelgelenkig in einem Implantatkörper gelagert und weist an seinem zweiten Ende ein Gewinde auf. Zur Anmontage der Suprakonstruktion wird diese auf den Implantatkörper aufgesetzt und an dem Ankerteil mittels einer auf dessen Gewinde aufgeschraubten Sicherungsmutter gehalten. Der Zugang zur Sicherungsmutter erfolgt durch die Kaufläche der Suprakonstruktion.

Aus der DE 295 14 042 U1 ist ein Implantatkörper bekannt, in dessen Kopfbereich ein im wesentlichen kugelförmiges Aufnahmeteil für ein Ankerteil zur Anmontage einer Suprakonstruktion mittels einer in das Aufnahmeteil einschneidenden Madenschraube in einer ausgerichteten Winkelstellung halterbar ist. Hierfür ist ein präzises Einschneiden des Aufnahmeteils durch die sichernde Schraube erforderlich, was angesichts der in der Praxis sehr kleinen Ausdehnung und schwierigen Zugänglichkeit der Bauteile erhebliche Probleme bereitet.

Der Erfindung liegt das Problem zugrunde, das Implantieren zu vereinfachen.

Die Erfindung löst dieses Problem durch eine Suprakonstruktion mit den Merkmalen des Patentanspruchs.

Insbesondere bei provisorischem Zahnersatz kann ein Aufrasten der Suprakonstruktion vorgesehen sein, die in ihrem Innenkanal eine elastisch verformbare Engstelle aufweist, mit der sie hinter einen erweiternden Kopf des Ankerteils greift und dieses sichert. Da der Kopf nicht komprimierbar sein muss und dementsprechend geschlossenwandig ausgestaltet sein kann, ist er gegen unbeabsichtigte Verformungen geschützt. Die elastisch verformbaren Wandungen des Eingriffskanals befinden sich innerhalb der Suprakonstruktion und sind somit durch ihre Anordnung ebenfalls geschützt. Definierte Kräfte bei der Montage und späteren Demontage der Suprakonstruktion können daher eingehalten werden. Zudem ist hygienisch vorteilhaft, dass die elastische Verformbarkeit der Wandungen des Eingriffskanals auch bei dessen geschlossenwandig Ausgestaltung ermöglicht werden kann, so dass die Suprakonstruktion hygienisch vorteilhaft möglichst spaltfrei ausgeführt werden kann.

Vorteilhaft wird die Ausrichtung des winkelbeweglichen Ankerteils durch das Aufsetzen des Zahnersatzes automatisch sichergestellt. Es kann weiterhin vorgesehen sein, dass der Innenkanal in einer Haube gelegen ist, die ein seitlich ausgreifendes Ansatzteil zur Einführung einer Sicherungsschraube aufweist, wobei die Sicherungsschraube ebenfalls den Kopf des Ankerteils untergreift und dieses damit mit einer Zugkraft gegenüber dem Kopfbereich des Implantatkörpers beaufschlagt, so dass dadurch das Ankerteil zwischen der Sicherungsschraube - mithin der Haube des Innenkanals - und dem koronalen Ende des Implantatkörpers unbeweglich verspannt ist.

Mit einem vorteilhaft ausgestalteten lmplantatkörper ist es möglich, vor dem Aufsetzen der Suprakonstruktion auf eine Ausrichtung des Ankerteils zu verzichten: Die Ausrichtung eines winkelbeweglich verbleibenden Ankerteils erfolgt erst durch Aufsetzen der Suprakonstruktion auf das noch bewegliche Ankerteil. Da die Suprakonstruktion aufgrund ihres vorherigen Aufbaus auf einem an einem Meistermodell parallelisierten Ankerteilersatz mit einem axial gegenüber dem Implantatkörper ausgerichteten Innenkanal versehen ist, ist es nur noch erforderlich, die Ausrichtung des Ankerteils an die Ausrichtung des Innenkanals anzupassen. Diese Anpassung muss also nicht durch separate Parallelisierung und Festlegung des abgewinkelten Ankerteils an dem Implantatkörper erfolgen, so dass eine damit verbundene, erhebliche Zusatzarbeit entfallen kann.

Wenn zur Anfertigung des ausgerichteten Zahnersatzes am Modell eine anschmelzbare Kunststoffhaube Verwendung findet, die je nach Winkelstellung des Implantats im Kiefer in unterschiedlicher Weise angeschmolzen und dadurch an den Winkelversatz angepasst werden kann, ist die Verwendung von zusätzlichen Keilen zwischen dem Schaft des Implantatkörpers und einer Suprakonstruktion entbehrlich.

Weitere Vorteile und Einzelheiten ergeben sich aus in der Zeichnung dargestellten Ausführungsbeispielen des Gegenstandes der Erfindung.

In der Zeichnung zeigt:
- Fig. 1: einen Implantatkörper mit ausgerichteter Suprakonstruktion in einer Längsschnittansicht,
- Fig. 2: den Schaftbereich des Implantatkörpers,
- Fig. 3: zwei Implantatkörper vor Aufsetzen der Suprakonstruktion,
- Fig. 4: die Implantatkörper nach Fig. 3 mit ausgerichteten Ankerteilen,
- Fig. 5: eine ähnliche Ansicht wie Fig. 4 eines einzelnen Implantatkörpers zur Abstützung eines einzelnen Zahnersatzes,
- Fig. 6: ein Ersatzimplantat für ein Meistermodell mit aufzusetzender Plexiglashaube,
- Fig. 7: einen Zahnersatz mit Implantatkörper und basal abgeschrägter Haube in Explosionsdarstellung der Teile.

Gemäß dem ersten Ausführungsbeispiel ist ein insgesamt mit 1 bezeichneter Implantatkörper vorgesehen, der einen zum Eindrehen in den Kieferknochen 2 vorgesehenen Schaftbereich 3 aufweist. Der Schaftbereich 3 läuft zu seinem basalen Ende 4 leicht konisch zusammen und umfasst ein selbstschneidendes Gewinde 5. Gemäß dem Ausführungsbeispiel beträgt der Konizitätswinkel α des Schafts 3 gegenüber seiner Achse 6 etwas weniger als 3°. Die einzelnen Gewindegänge 5 weisen gegenüber der Achse 6 einen Steigungswinkel β von etwa 45° auf.

Der Schaft 3 kann insgesamt aus einem biokompatiblen Metall, beispielsweise Titan, bestehen und vorzugsweise eine Oberflächenbeschichtung aufweisen, die das Heranwachsen von Knochenmaterial an den eingesetzten Schaft 3 begünstigt.

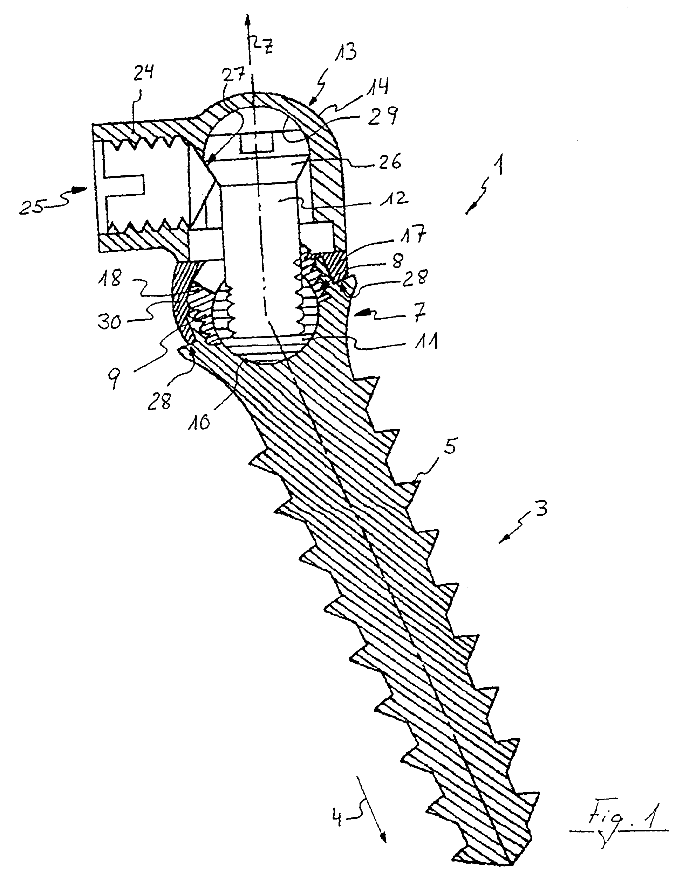

In seinem koronalen Kopfbereich 7 weist der Implantatkörper 1 eine Ausnehmung 8 auf, die einen rundzylindrischen Bereich 9 sowie einen daran in basaler Richtung 4 anschließenden Kugelkappenbereich 10 umfasst. In der Ausnehmung 8 ist ein kugelförmiges Aufnahmeteil 11 aufgenommen, in dem ein Ankerteil 12, das zur Anmontage einer Suprakonstruktion 13, von dem in Fig. 1 die Haube 14 dargestellt ist, dient. Das kugelförmige Aufnahmeteil 11 weist ein Innengewinde 15 auf, in das das Ankerteil 12 mittels eines Außengewindes 16 eindrehbar ist.

Dem Aufnahmeraum 8 ist ein Innengewinde 17 zugeordnet, in das ein Haltemittel 18 eindrehbar ist. Das Haltemittel 18 ist als Ringkörper ausgebildet und hält das kugelförmige Aufnahmeteil 11 in der Ausnehmung 8, wobei es dieses koronal übergreift und dadurch gegen ein Herausziehen sichert. Dabei sind die Innenwandungen des Ringkörpers an die kugelförmige Umrißgestalt des Aufnahmeteils 11 angepaßt, klemmen dieses jedoch auch in zusammengesetzter Stellung der Bauteile nicht. Dadurch und weil die Durchtrittsöffnung 19 des Ringkörpers mit einer Übermaß gegenüber der Breitenerstreckung des Ankerteils 12 ausgebildet ist, kann auch bei eingesetztem Aufnahmeteil 11 und Haltemittel 18 eine Verschwenkung des Ankerteils 12 gegenüber der Achse 6 des Implantatkörpers 1 erfolgen.

Eine Festlegung des einschraubbaren Ankerteils 12 erfolgt erst durch das Aufsetzen der Haube 14 und das Einschrauben einer durch einen seitlichen Ansatzteil 24 durchgreifenden Schraube 25, die in zusammengesetzter Stellung der Teile einen konisch erweiternden Kopfbereich 26 des Ankerteils 12 untergreift und dadurch eine in Richtung des Pfeils Z gerichtete Zugkraft auf das Ankerteil 12 ausübt. Da gleichzeitig das ringförmige Haltemittel 18 das Aufnahmeteil 11 gegen ein Herausziehen aus der Ausnehmung 8 sichert, wird somit das Ankerteil 12 zwischen der vorderen Konusfläche 27 der einzuführenden Schraube 25 und dem ringförmigen Haltemittel 18 verspannt. Gleichzeitig ist der erweiterte Kopf 26 des Ankerteils 12 derart nach koronal gekrümmt, daß er an die Krümmung 29 der Haube 14 angepaßt und daher spielfrei in dieser gehalten.

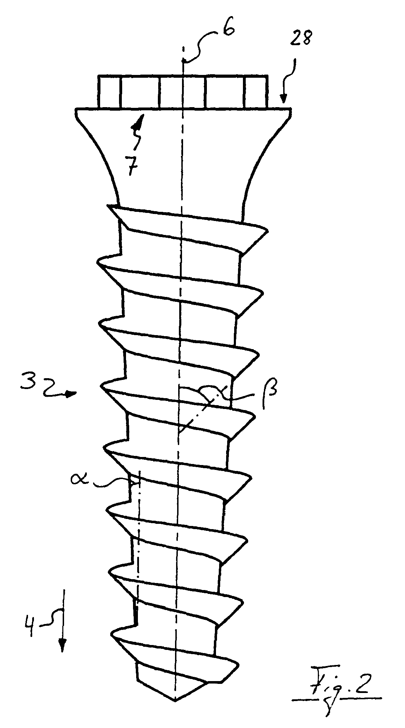

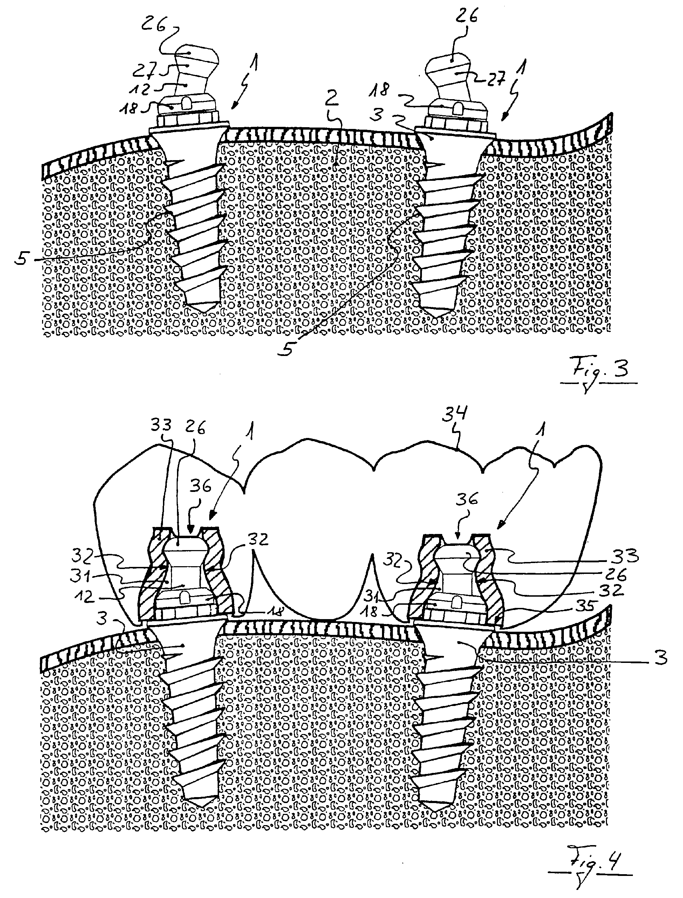

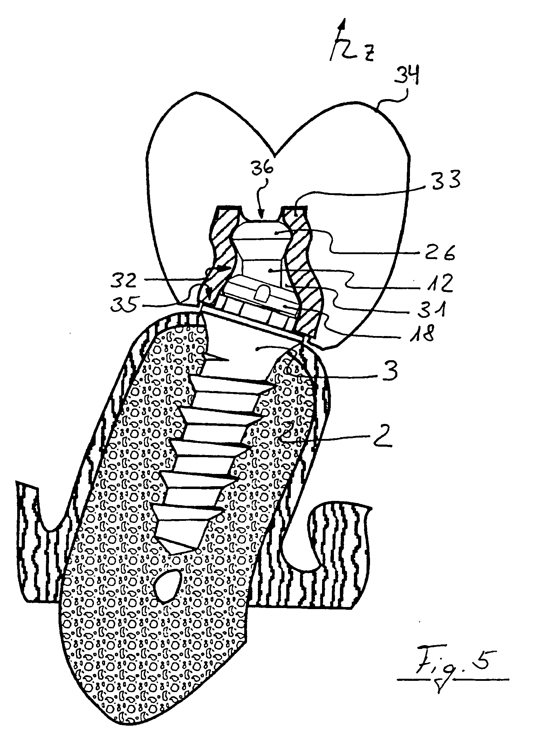

Auf einer Stufe 28 des koronalen Endes 7 des Schafts 3 und dem basalen Ende der Haube 14 kann ein Zwischenkeil 30 angeordnet sein, der an die Winkelstellung der Suprakonstruktion 13 gegenüber der Achse 6 angepaßt ist. Es kann ein Sortiment von verschiedenen Keilen 30 bereitgehalten werden. Dabei kann sich die Haube 14 einenends auf dem Keil 30 und andererseits auf einem erweiterten Randbereich im koronalen Endbereich 7 des Schafts 3 abstützen, wie in Fig. 1 dargestellt ist. Das Vorhandensein derartiger Keile 30 ist jedoch nicht zwingend (sh. auch Fig. 4, Fig. 6, 7). Insbesondere ist bei einem alternativen Verfahren (s. unten) möglich, das basale Ende der Haube 114 direkt mit einer Abschrägung in Anpassung an die Schrägstellung des Schafts 3 zu versehen. Dann steht die Haube 114 auch ohne einen Keil 30 auf der Stufe 28 parallelisiert auf, es kann eine Unterlegscheibe 36 zwischen diesen Bauteilen Verwendung finden.

Die Haube 14 kann auf dem Randbereich des Schafts 3 bzw. auf dem Keil 30 festzementiert sein, wobei die Verschraubung mittels der Schraube 25 zusätzlich möglich ist. Es ist auch möglich, die Haube 14 nur durch Zementieren an dem Schaft 3 zu sichern.

Insbesondere für eine vorübergehende Sicherung, etwa eines provisorischen Zahnersatzes, kommt auch in Frage, einen Innenkanal 31 des Zahnersatzes derart auszubilden, daß er eine Engstelle 32 aufweist, die den sich erweiternden Kopf 26 des Ankerteils 12 hintergreift (Fig. 4). Hierzu ist der Innenkanal 31 insgesamt mit einem elastischen Material 33, beispielsweise einem Silikonschlauch, ausgekleidet, der elastisch verformbar ist. Durch Druck entgegen dem Pfeil Z kann daher ein einzelner Zahnersatz 13 oder eine Brücke mit mehreren Zahnersatzteilen 34 auf die Implantatkörper 1 aufgedrückt werden, wobei die Zahnersatzteile 34 hinter dem erweiterten Kopfbereich 26 des Ankerteils 12 einrasten. Gleichzeitig stehen die basalen Endbereiche 35 auf der Stufe 28 des Schaftbereichs 3 auf, wodurch ein weiteres Eindrücken des Zahnersatzes 34 verhindert ist. Zudem ist eine Stufe 36 im Zahnersatz 34 ausgebildet, die auf der Oberfläche des Kopfes 26 des Ankerteils 12 aufsteht und auch insofern einer weiteren Druckkraft entgegen dem Pfeil Z widersteht.

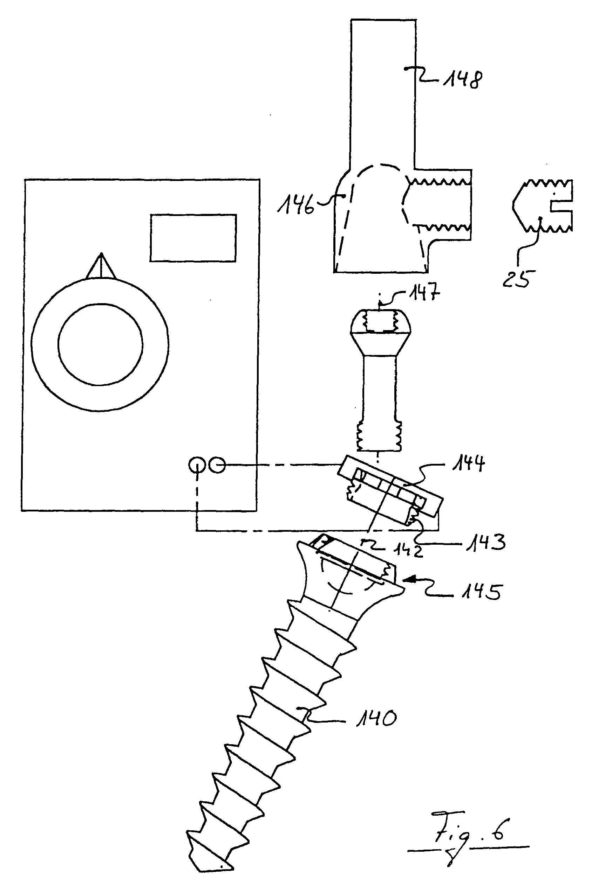

In Fig. 5 sind für einen Einzelzahn ähnliche Verhältnisse wie in Fig. 4 dargestellt, wobei der Schnitt in lingual-bukkaler Richtung gelegt ist.

Zum Einbringen eines erfindungsgemäßen Implantatkörpers 1 in den Kieferknochen 2 und zum anschließenden Aufbau einer Suprakonstruktion 13 auf dem Implantatkörper 1 kann zunächst eine Bohrung im Kieferknochen 2 angefertigt werden, in die der Implantatkörper 1 mit seinem Schaft 3 einsetzbar ist. Zur Herstellung und Ausrichtung der Suprakonstruktion wird zunächst auf den oberen Bereich des Schafts 3 ein Transferkörper als Abdruckmodell aufgesetzt, das axial fluchtend und lösbar mit dem Schaft 3 verbunden ist. Dann wird ein Abdruck von diesem Transferkörper genommen, in dem er steckenbleibt, so daß nun außerhalb der Patientensphäre im Technikerlabor an diesem Abdruckmodell umgekehrt ein Ersatzimplantat aufgesteckt werden kann, um damit ein sogenanntes Meistermodell des Kiefers anzufertigen. Dieses Meistermodell enthält ein Modell der umgebenden Zähnen sowie das eingesteckte Ersatzimplantat mit der Ausrichtung, die das Originalimplantat im Kiefer hat.

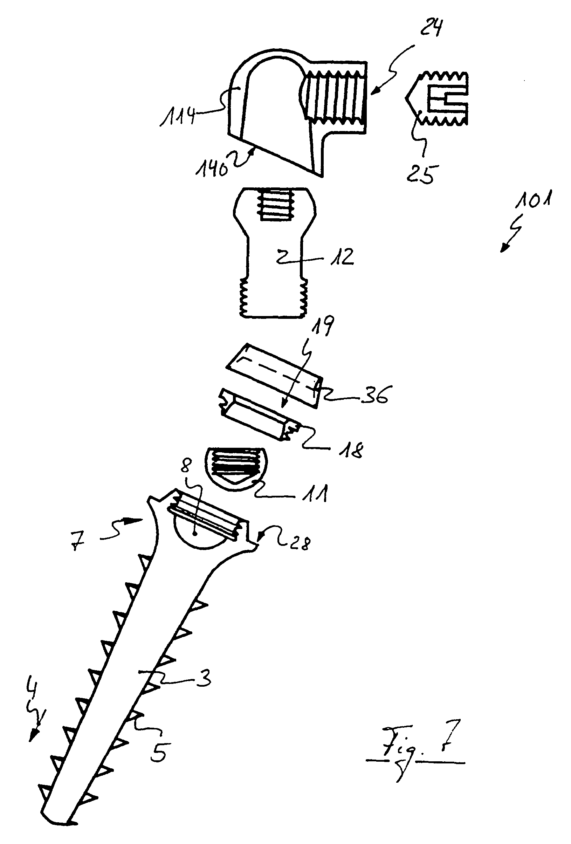

Für den Aufbau des Zahnersatzes auf dem Meistermodell wird gemäß der in Fig. 6 gezeigten Anordnung, die zu den Endverhältnissen nach Fig. 7 führt, in dem Ersatzimplantat 140 ein Ankerteilersatz 141 gegenüber der Achse 142 des Ersatzimplantats 140 ausgerichtet und mit einem Ringkörper 143, der eine weite Durchtrittsöffnung umfaßt, die etwa einen Schwenkwinkel von 25° des Ankerteilersatzes ermöglicht, durch Eindrehen in ein Gewinde des Ersatzimplantats klemmend festgelegt. Auf dem so ausgerichteten Ankerteilersatz wird der Zahnersatz aufgebaut. Hierzu wird zunächst eine Unterlegscheibe 144 auf eine koronale Stufe 145 des Ersatzimplantats 140 aufgelegt oder ist mit dem Ringkörper 143 verbunden, wobei die Stufe 145 einer identischen Stufe 28 auf dem Originalimplantat 1 entspricht. Die Unterlegscheibe 144 wird durch Stromfluß erhitzt und ist beispielsweise als Wolframscheibe ausgebildet, die der Ausrichtung der Stufe 145 entspricht und damit in der Regel abgewinkelt zu dem Ankerteilersatz 141 steht. Auf die Wolframscheibe 144 wird ein Haubenteil 146 aufgedrückt, die einen seitlich ausgreifenden Ansatzteil 147 zur Einführung der Sicherungsschraube 25 aufweist, wie es auch später beim fertigen Zahnersatz vorgesehen ist. Das hier verwendete Haubenteil 146 ist jedoch aus Plexiglas gefertigt, um einerseits optisch kontrollieren zu können, daß eine probehalber eingeführte Schraube 25 den erweiterten Kopfbereich des Ankerteilersatzes 141 untergreift. Zum anderen wird das Haubenteil 146, das parallel zum Ankerteilersatz 141 stehen soll und damit abgewinkelt zur Unterlegscheibe 144 ist, durch Erhitzen der Wolframscheibe 144 so lange im unteren Bereich angeschmolzen, bis es bündig auf der Wolframscheibe steht und gleichzeitig parallel zum Ersatzankerteil 141 ausgerichtet ist. Die Plexiglashaube 146 weist einen Schaft 148 zum Einspannen in ein Bohrfutter oder dergleichen Werkzeughalterung auf. Das Anschmelzen der Plexiglashaube 146, die in ihrem unteren Bereich einen Durchmesser aufweist, der dem Durchmesser der Wolframscheibe 144 entspricht, kann sehr unsymmetrisch erfolgen, um damit den Winkelversatz zwischen der Achse 147 des Ankerteilersatzes 141 und der Achse 142 des Ersatzimplantats 140 auszugleichen. Nach diesem Vorgang wird die Wolframscheibe 144 entfernt und das Plexiglashaubenteil 146 mit Wachs auf der Stufe 145 befestigt. Ebenso wird das Zahnersatzmodell aus Wachs modelliert. Das so gefertigte Zahnersatzmodell wird in Einbettmasse gedrückt, dann durch Erhitzen verdampft, die so entstandene Form wird beispielsweise mit Gold ausgegossen und anschließend eventuell verblendet.

Der dadurch gefertigte Zahnersatz 13,34 kann unmittelbar oder über eine Unterlegscheibe 36 auf eine Stufe 28 des Schafts 3 des beim Patienten eingesetzten lmplantatkörpers 1 übertragen werden (Fig. 7). Das Zwischensetzen von Keilen 30 ist dann entbehrlich. Alternativ zur Anschmelzung der Plexiglashaube 146 kann auch wie üblich mit einem Sortiment unterschiedlicher Keile 30 gearbeitet werden. Entsprechend dem Zahnersatzmodell muß dann ein gleichartiger Keil 30 auch wieder beim Patienten Verwendung finden. In jedem Fall kann bei Übertragung einer derartigen, in ihre Endgestalt gebrachten Suprakonstruktion 13 auf den Patienten eine Ausrichtung des dort frei schwenkbaren Ankerteils 12 durch das Aufsetzen der Suprakonstruktion 13 erfolgen, da in diesem die korrekte Abwinklung zu der Achse 6 des Schafts 3 vorgenommen wurde.

Dabei ist das Aufnahmeteil 11 bereits mit dem Schaft 12 verbunden, der Ringkörper 18 ist zwischengesetzt und in der Ausnehmung 8 des Schafts 3 gehalten, nämlich über ein Innengewinde festgelegt. Da das Aufnahmeteil 11 durch das Haltemittel 18 nicht klemmend festgelegt ist, bleibt die Schwenkbarkeit des Aufnahmeteils 11 sowie das darin eingreifenden Ankerteils 12 trotz der Festlegung erhalten. Die Ausrichtung erfolgt dann durch die auf das Ankerteil 12 aufzusetzende Suprakonstruktion. Die Festlegung des so erhaltenen Zahnersatzes 13,34 kann auf die oben geschilderten Arten über Zementieren, Verschrauben oder Aufrasten bzw. eine Kumulation dieser Maßnahmen erfolgen.

## Patentansprüche

1. Suprakonstruktion (13), welche
■ mittels eines Ankerteils (12) an einem Implantatkörper (1) montierbar ist,
■ und in ihrem inneren Bereich einen Eingriffskanal (31) für das Ankerteil (12) aufweist,
wobei der Eingriffskanal (31)
■ über seinen Verlauf einen sich ändernden Querschnitt aufweist
■ und zwischen einem dem Implantatkörper zugewandten großen Querschnittsbereich und einem hierzu axial beabstandeten weiteren großen Querschnittsbereich zur Einfassung eines Kopfes (26) des Ankerteils (12) eine Engstelle (32) aufweist,
**dadurch gekennzeichnet,**
**dass** die Wandungen des Eingriffskanals (31) aus einem elastisch verformbaren Material bestehen.

## Claims

1. Superstructure (13) which
- can be mounted on an implant body (1) by means of an anchoring part (12),
- and has an engagement channel (31) for the anchoring part (12) in its inner region, wherein the engagement channel (31)
- has a cross-section varying over its extent
- and has a constriction (32) between one region of large cross-section towards the implant body and another region of large cross-section axially spaced apart therefrom for clasping a head (26) of the anchoring part (12),
**characterized in that**
the walls of the engagement channel (31) consist of elastically deformable material.

## Revendications

1. Superstructure (13) qui
- peut être montée sur un corps d'implant (1) au moyen d'une partie d'ancrage (12),
- et qui possède dans sa partie intérieure un canal d'engagement (31) pour la partie d'ancrage (12),
dans laquelle le canal d'engagement (31)
- a une section qui se modifie sur son étendue
- et possède, entre une zone de grande section orientée vers le corps d'implant et une autre zone de grande section écartée de celui-ci dans le sens axial, une zone resserrée (32) destinée à enfermer une tête (26) de la partie d'ancrage,
**caractérisée en ce que** les parois du canal d'engagement (31) se composent d'un matériau capable de déformation élastique.
